# EUROPEAN PATENT APPLICATION

(11) **EP 2 439 932 A1**
(43) Date of publication of application: **11.04.2012**
(21) Application number: 09845961.3
(22) Date of filing: 19.06.2009
(51) Int. Cl.: H04N 5/445

(54) **USER-DEFINED INTERFACE METHOD OF TELEVISION**

(71) Applicant: Shenzhen TCL New Technology Co., LTD, Nanshan District Shenzhen Guangdong 518067 (CN)
(72) Inventor: FU, Yaoyuan, Shenzhen Guangdong 518067 (CN); LI, Meng, Shenzhen Guangdong 518067 (CN); YANG, Yingying, Shenzhen Guangdong 518067 (CN)
(74) Representative: Manitz, Finsterwald & Partner GbR
(86) International application number: PCT/CN2009/000671
(87) International publication number: WO 2010/145047

(57) **Abstract**

A method for customizing an interface in a TV set is provided in the present invention. This method comprises the following steps of: step a: setting a TV playing region and a customized function region; step b: storing the customized interface setting parameters into a memory of the TV set; and step c: invoking and displaying the customized interface from the memory depending on the user's settings when the TV set is powered on. By disposing a customized function region, the method for customizing an interface in a TV set according to the present invention allows the user who is watching the TV to also acquire other useful information depending on his own needs, and can also satisfy tastes of different users. This enriches functions of the TV set and makes it possible for the user to acquire interested information quickly through the TV set.

## Description

### BACKGROUND

### 1. Technical Field

The present invention relates to the field of television, and more particularly, to a method for customizing an interface in a television (TV) set.

### 2. Description of Related Art

TV sets are a kind of household appliances that are widely used. Owing to rapid development of television technologies, the user now can input instructions to a TV set through a remote controller or in other ways to display many functional menus on a screen of the TV. The user can be guided to next steps by following the menu options presented in the menus, and in this way, diversified functions can be provided. However, as the functions of TV sets become increasingly diversified, the process of operating the TV sets becomes more and more complex, and it is often the case that the user cannot find a desired function promptly so as to display the desired function on the screen quickly. Especially for TV sets having Internet functions, it is very important for the user to find contents in which he is interested from a large amount of information quickly.

### BRIEF SUMMARY

The present invention provides a method for customizing an interface in a TV set, which can overcome the technical shortcoming of the prior art that the TV set user is unable to fmd a desired function or interface conveniently.

A method for customizing an interface in a TV set according to the present invention comprises the following steps of:
step a: setting a TV playing region and a customized function region;
step b: storing the customized interface setting parameters into a memory of the TV set; and
step c: invoking and displaying the customized interface from the memory depending on the user's settings when the TV set is powered on.

More specifically, a plurality of customized interface parameters are set in the step b.

More specifically, in the step c, the customized interface is altered or invoked depending on the user's desire after the TV set is powered on.

More specifically, the step a is operated with a remote control or a control panel of the TV set.

More specifically, the step a is operated by using a mouse device externally connected to the TV set.

More specifically, the customized function region includes a clock icon, local weather forecasts, real-time stock index curves, and scrolling program lists of channels.

More specifically, the TV set is a TV set having a network function, and the customized function region includes scrolling news reports that are updated synchronously with a network.

More specifically, the TV playing region is a full-screen movie playing region having a black screen area at both an upper side and a lower side, and the customized function region is disposed in the black screen areas.

By disposing a customized function region, the method for customizing an interface in a TV set according to the present invention allows the user who is watching the TV to also acquire other useful information depending on his own needs, and can also satisfy tastes of different users. This enriches functions of the TV set and makes it possible for the user to acquire interested information quickly through the TV set; and especially in the times of network TV, this makes it convenient for the user to acquire network information.

### BRIEF DESCRIPTION OF THE DRAWINGS

Fig. 1 is a schematic view showing an initial interface in a TV according to a preferred embodiment of the present invention; and
Fig. 2 is a schematic view showing an interface when a movie is played in a full screen according to the preferred embodiment of the present invention.

Hereinafter, implementations, functional features and advantages of the present invention will be further described with reference to embodiments thereof and the attached drawings.

### DETAILED DESCRIPTION

In order to make the objective, the technical solution and the advantages of the present invention more apparent, the present invention will be further detailed in conjunction with the attached drawings and embodiments thereof. It shall be understood that, the embodiments described herein are only intended to illustrate but not to limit the present invention.

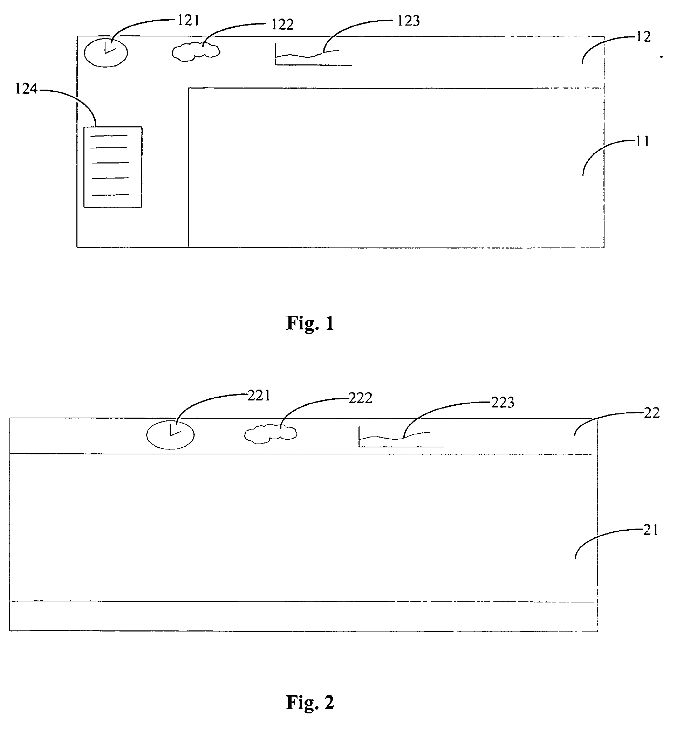

Referring to Fig. 1, when a TV set is powered on, an initial interface is comprised of two portions, i.e., a TV playing region 11 and a customized function region 12. The TV playing region 11 is in a non-full-screen mode for playing programs of TV channels, video disks or the like. The customized function region 12 is provided with functional options in which a user is most interested, which are visually displayed in text or graph. Positions in which the text and the graph are displayed can be determined by the user; i.e., the user can independently arrange the customized interface and determine which contents are displayed. In this preferred embodiment, the TV playing region 11 is located at a lower right corner of the screen, and the customized function region 12 is located at a left side and an upper side of the screen. In the spare room, the user may selectively display some interested functional settings such as a clock icon 121, local weather forecasts 122, real-time stock index curves 123, and scrolling program lists of channels 124 shown in Fig. 1; and the functional settings may also include scrolling news reports in the text form that can be updated synchronously with the Internet. Of course, the TV playing region 11 and the customized function region 12 are not only limited to the arrangement shown in Fig. 1, other arrangements are also possible.

Arrangement and settings of the customized function region 12 are accomplished by the user invoking the functional options stored in the TV set. The user can not only set the desired functional options in the customized function region 12 of the initial interface, but also move the functional options to change displaying positions thereof depending on his taste. The aforesaid settings and movement can be operated with a remote control, a control panel of the TV set, or a mouse connected to an extended interface (e.g., a USB interface) of the TV set.

After settings the customized interface, the user may store the related data into a memory of the TV set. When the TV set is powered on again, the settings can be directly invoked by a microprocessor control unit (MCU) in the TV set, and the customized function region 12 stored by the user can be displayed in the desktop of the TV set that is powered on. When a plurality of users operate the same TV set, they may set different customized interfaces depending on their own tastes and store the customized interface schemes into the memory respectively; and after the TV set is powered on, the users can invoke their own customized interface schemes depending on their own tastes. In this way, after the TV set is powered on, the user can not only choose and scan channels but also observe some interested information such as stock indexes and weather forecasts. After a corresponding TV channel is chosen or a movie is started to play, the user can choose to amplify the TV playing region 11 to a full screen, which can be operated with a corresponding button of the remote control.

Furthermore, as shown in Fig. 2, when the movie, especially a widescreen movie, is played in the full screen of the TV set, a black screen area 22 appears at both an upper side and a lower side of a playing region 21. For a large-screen TV set, the black screen areas 22 are much obvious and cause a great waste of the display region; and in case the movie is played for a long time, whereas the video signal of the black screen areas 22 keep in unaltered condition all the time. It is unfavorable for a service life of the screen. According to the method of customizing an interface in a TV set of the present invention, the customized function region 12 may also be disposed in the black screen areas 22, in which the user can set some favorable functional options such as a clock icon 221, local weather forecasts 222 and stock index curves 223 depending on his own needs.

According to the above descriptions, the method for customizing an interface in a TV set according to the preferred embodiment of the present invention comprises the following steps of:
step a: setting a TV playing region 11 and a customized function region 12;
step b: storing the customized interface setting parameters of the step a into a memory of the TV set; and
step c: invoking and displaying the customized interface from the memory depending on the user's settings when the TV set is powered on.

Of course, the user may also alter or invoke his own customized interface in the step c, and this is suitable for use in the case of a plurality of users.

What described above are only preferred embodiments of the present invention but are not intended to limit the scope of the present invention. Accordingly, any equivalent structural or process flow modifications that are made on basis of the specification and the attached drawings or any direct or indirect applications in other technical fields shall also fall within the scope of the present invention.

## Claims

1. A method for customizing an interface in a TV set, comprising the following steps of:
step a: setting a TV playing region and a customized function region;
step b: storing the customized interface setting parameters into a memory of the TV set; and
step c: invoking and displaying the customized interface from the memory depending on the user's settings when the TV set is powered on.

2. The method for customizing an interface in a TV set of Claim 1, wherein a plurality of customized interface parameters are set in the step b.

3. The method for customizing an interface in a TV set of Claim 2, wherein in the step c, the customized interface is altered or invoked depending on the user's desire after the TV set is powered on.

4. The method for customizing an interface in a TV set of Claim 1, wherein the step a is operated with a remote control or a control panel of the TV set.

5. The method for customizing an interface in a TV set of Claim 1, wherein the step a is operated by using a mouse device externally connected to the TV set.

6. The method for customizing an interface in a TV set of Claim 1, wherein the customized function region includes a clock icon, local weather forecasts, real-time stock index curves, and scrolling program lists of channels.

7. The method for customizing an interface in a TV set of Claim 1, wherein the TV set is a TV set having a network function, and the customized function region includes scrolling news reports that are updated synchronously with a network.

8. The method for customizing an interface in a TV set of Claim 1, wherein the TV playing region is a full-screen movie playing region having a black screen area at both an upper side and a lower side, and the customized function region is disposed in the black screen areas.
